# EUROPÄISCHE PATENTSCHRIFT

(11) **EP 2 841 763 B1**
(45) Veröffentlichungstag und Bekanntmachung des Hinweises auf die Patenterteilung: **23.05.2018**
(21) Anmeldenummer: 13716299.6
(22) Anmeldetag: 16.04.2013
(51) Int. Cl.: F01B 13/06, F16D 55/38, F03C 1/047, F03C 1/04, F03C 1/40, F04B 1/047, F04B 1/04, F16D 55/24, B60T 1/06

(54) **RADIALKOLBENMOTOR MIT BREMSE**
RADIAL PISTON ENGINE WITH BRAKE
MOTEUR À PISTONS RADIAUX POURVU D'UN FREIN

(30) Priorität: 28.04.2012 DE 102012008622
(43) Veröffentlichungstag der Anmeldung: 04.03.2015
(73) Patentinhaber: Robert Bosch GmbH, 70442 Stuttgart (DE)
(72) Erfinder: JUST, Hendrik, 97846 Partenstein (DE); TIBARI, Khaled, 58452 Witten (DE)
(74) Vertreter: Thürer, Andreas
(86) Internationale Anmeldenummer: PCT/EP2013/057853
(87) Internationale Veröffentlichungsnummer: WO 2013/160145

(56) Entgegenhaltungen:
- EP-A1- 0 887 548
- EP-A1- 1 072 814
- EP-A2- 1 184 596
- EP-B1- 1 038 102
- DE-A1- 19 624 533
- DE-T2- 60 011 352
- GB-A- 2 269 207
- US-A- 3 749 195
- US-A- 4 271 725

## Beschreibung

Die Erfindung betrifft einen hydrostatischen Radialkolbenmotor mit einer Bremse gemäß dem Oberbegriff des Patentanspruchs 1.

Derartige Radialkolbenmotoren werden zum Antrieb von mobilen Arbeitsmaschinen wie Rüttelwalzen, Gabelstapler, Straßenwalzen, Straßenfräsen und Radlader verwendet. Radialkolbenmotoren haben eine Mehrzahl von sternförmig angeordneten Zylinder-Kolben-Einheiten, wobei die Kolben außen oder innen abgestützt sein können. Die Zylinder-Kolben-Einheiten können mit der Abtriebswelle mitdrehen oder im Wesentlichen gehäusefest ruhen. Als Bremsen für derartige Radialkolbenmotoren sind z.B. Trommelbremsen und trocken oder in Öl laufende Lamellenbremsen bekannt, die in den Motor integriert realisiert werden können. Lamellenbremsen haben eine Mehrzahl von ringscheibenförmigen Lamellen, die aneinander anliegen und an deren Anlagebereichen jeweils Teile der Gesamtbremskraft beziehungsweise des Gesamtbremsmoments übertragen werden. Dazu sind die Lamellen abwechselnd drehfest an ein zu bremsendes Bauteil und an ein Gehäuse gekoppelt. Zum Bremsen werden die Lamellen in axialer Richtung zusammen gepresst. Dazu sind sie axial in geringem Maße gegenüber dem zu bremsenden Bauteil beziehungsweise gegenüber dem Gehäuse verschiebbar.

In der Druckschrift DE 195 04 451 B4 ist ein Radialkolbenmotor mit einer seitlich neben dessen Zylinder-Kolben-Einheiten angeordneten Lamellenbremse gezeigt. Dabei sind die Lamellen seitlich bzw. axial neben den Zylinder-Kolben-Einheiten und zwischen einem radial inneren Abschnitt einer Abtriebswelle und einem radial äußeren Gehäuse angeordnet. Dem entsprechend sind die Lamellen abwechselnd mit dem Gehäuse und dem Abschnitt der Abtriebswelle drehfest verbunden. Der Abschnitt der Abtriebswelle ist als radiale Erweiterung der Welle oder als hülsenartiger Wellenbund realisiert, in dessen Inneren ein oder zwei Wälzlager einer Wellenlagerung vorgesehen sind.

Die Druckschrift US 6,357,558 zeigt ebenfalls einen Radialkolbenmotor mit einer Lamellenbremse. Dabei ist das Prinzip der Lamellenbremse gegenüber der zuletzt genannten Druckschrift dahingehend verändert, dass die Lamellen zwischen einem radial inneren hülsenartigen Gehäusebund und einem radial äußeren hülsenartigen Wellenbund angeordnet sind. Im Innern des Gehäusebundes befindet sich eine Lagerung der Welle.

Bei beiden genannten Druckschriften wird eine anzutreibende Vorrichtung - z.B. ein Rad - an die Welle angeflanscht. Dabei sind der Abtriebsflansch und seine Verbindungselemente (Löcher oder Zapfen) stirnseitig an der Welle ausgebildet und dabei zur Bremse axial beabstandet.

Weiter wird auf die DE 196 24 533 A1, die US 3 749 195, die EP 1 184 596 A2 und die US 4 271 725 verwiesen.

Nachteilig an derartigen Radialkolbenmotoren mit Bremsen ist deren Baulänge, die sich durch die - in axialer Richtung betrachtete - Aneinanderreihung von Abtriebsflansch, Bremse und Zylinder-Kolben-Einheiten ergibt. Weiterhin sind die Anbaumöglichkeiten an den Abtriebsflansch eingeschränkt.

Dem gegenüber liegt der Erfindung die Aufgabe zu Grunde, einen kompakt bauenden Radialkolbenmotor mit Bremse zu schaffen, dessen axiale Baulänge verringert ist. Weiterhin sollen die Anbaumöglichkeiten an den Abtriebsflansch auf einfache Weise verbessert werden.

Diese Aufgabe wird gelöst durch einen Radialkolbenmotor mit den Merkmalen des Patentanspruchs 1.

Die erfindungsgemäße Radialkolbenmotor hat sternförmig angeordnete Zylinder-Kolben-Einheiten, ein Gehäuse und eine Abtriebswelle, wobei zwischen einem inneren axialen hülsenartigen Bund des Gehäuses und einem äußeren axialen hülsenartigen Bund der Abtriebswelle zumindest Teile einer Bremse angeordnet sind. An der Abtriebswelle ist ein Abtriebsflansch befestigt, der zur Aufnahme z.B. eines vom Motor angetriebenen Rades dient. Der Abtriebsflansch ist radial außerhalb des Wellenbundes an dessen Außenumfang befestigt. Der Abtriebsflansch kann einen Bohrungskranz haben. Damit ist ein Radialkolbenmotor mit Bremse geschaffen, dessen axiale Baulänge verringert ist. Weiterhin sind die Anbaumöglichkeiten an den am äußersten Umfang angeordneten Abtriebsflansch erweitert, da er beidseitig zugänglich ist.

Weitere vorteilhafte Ausgestaltungen der Erfindung sind in den abhängigen Patentansprüchen beschrieben.

Der Radialkolbenmotor hat zur Lagerung der Abtriebswelle im Gehäuse zwei Lager - insbesondere Kegelrollenlager -. Dabei ist zumindest eines der beiden Lager im Gehäusebund aufgenommen. Damit ist die axiale Baulänge des erfindungsgemäßen Radialkolbenmotors weiter minimiert. Zur optimalen Abstützung ist der Abtriebsflansch - axial betrachtet - zwischen den beiden Lagern angeordnet.

Indem der axiale Wellenbund einstückig mit der Abtriebswelle gebildet ist, kann die Festigkeit erhöht werden. Auch eine einstückige Ausbildung des Abtriebsflansches mit dem axialen Wellenbund dient der Festigkeit der Abtriebswelle. Insbesondere können auch die Herstellkosten gering gehalten werden.

Eine besonders bevorzugte Ausführungsform der Bremse ist eine Lamellenbremse mit abwechselnd gehäusebundseitigen Lamellen und wellenbundseitigen Lamellen. Das so gebildete Lamellenpaket ist also zwischen dem inneren axialen Gehäusebund und dem äußeren axialen Wellenbund angeordnet.

Zum Aktivieren der Bremse können die Lamellen von einer Tellerfeder über einen kreisscheibenförmigen Kolben gegen einen stirnseitig am Gehäusebund befestigten Rückhaltering gepresst werden.

Aus sicherheitstechnischen Gründen wird es bevorzugt, wenn die Tellerfeder über einen ringförmigen Druckraum und über den Kolben in Richtung weg von den Lamellen zum Lösen der Bremse spannbar ist, wobei die Lamellen entspannt werden. Damit wird die Bremse bei einem Ausfall der Hydraulik geschlossen.

Eine bevorzugte Weiterbildung hat einen kreisscheibenförmigen Dichtring, über den der Druckraum gegenüber einem Bremsraum begrenzt und abgedichtet ist. In dem Bremsraum sind die Lamellen angeordnet.

der Druckraum und der Dichtring sind von mehreren - vorzugsweise drei - gestuften Stiften durchsetzt, die einerseits am Kolben und andererseits an einer Distanzbuchse anliegen, wobei die Stifte jeweils eine Dichtung aufweisen zum Abdichten des Druckraumes aufweisen. Die Distanzbuchse liegt an einer gehäusebundseitigen Lamelle an, die die erste Lamelle des Lamellenpakets bildet.

Vorzugsweise ist zwischen dem Abtriebsflansch oder dem Wellenbund und dem Gehäuse eine Doppelkegel-Dichtung zur Abdichtung des Bremsraumes gegenüber der Umgebung vorgesehen. Die Dichtung hat zwei Teile, von denen eines rotiert und das andere gehäusefest ist. Sie liegen über zwei ebene Oberflächen aneinander an zwischen, denen ein hydrostatisches Lager gebildet wird.

Damit der erfindungsgemäße Radialkolbenmotor für mobile Arbeitsmaschinen geeignet ist, kann er als langsam laufender Mehrhubmotor mit hohem Schluckvolumen und hohem Abtriebsmoment weitergebildet sein. Gemäß dem Konzept der äußeren Kolbenabstützung kann ein die Zylinder-Kolben-Einheiten umfassender Hubring vorgesehen sein. Dieser kann ein Teil des Gehäuses bilden.

Vorzugsweise wird der Hubring zwischen einem ersten Gehäuseteil und einem zweiten Gehäuseteil eingespannt, wobei am Hubring eine erste Dichtung angebracht ist die am ersten Gehäuseteil anliegt und wobei am zweiten Gehäuseteil eine zweite Dichtung angeordnet ist, die am Hubring anliegt. Damit kann das Gehäuse so montiert werden, dass zunächst der Hubring auf das zweite Gehäuseteil und dessen Dichtung abgesenkt wird und dass danach das erste Gehäuseteil auf den Hubring und dessen Dichtung abgesenkt wird. Dabei wird jeweilige Dichtung durch die Schwerkraft in einer entsprechenden Nut liegend gehalten.

Bei einem erfindungsgemäßen Radialkolbenmotor umgreifen die beiden Lager die Abtriebswelle, der Gehäusebund umgreift zumindest eines der Lager, die Bremse umgreift den Gehäusebund, der Wellenbund umgreift die Bremse, und der Abtriebsflansch umgreift den Wellenbund.

Um eine lange Führung der Kolben in den Zylindern zu erreichen wird es bevorzugt, wenn die Zylinder und die Kolben der Zylinder-Kolben-Einheiten gestuft sind. Dadurch entsteht im Zentrum der Zylinder-Kolben-Einheiten genug Raum für die Kanäle, über die die Zylinder abwechselnd mit einer Hochdruck- und einer Niederdruckseite des Radialkolbenmotors verbunden werden.

Im Folgenden wird anhand einer Figur ein Ausführungsbeispiel eines erfindungsgemäßen Radialkolbenmotors detailliert beschrieben.

In der Figur ist der Radialkolbenmotor in einem durch die Mittelachse gehenden Längsschnitt gezeigt. Der Radialkolbenmotor hat ein erstes Gehäuseteil 8a und ein zweites Gehäuseteil 8b, zwischen denen ein Hubring 1 über Schrauben 2 befestigt ist. Am Innenumfang des Hubrings 1, der damit ein drittes Gehäuseteil bildet, ist eine gewellte Hubkurve 3 vorgesehen. Im Inneren des Hubrings 1 stützt sich eine Mehrzahl von Kolben 5 über eine jeweilige Rolle 17 an der Hubkurve 3 ab, wobei die Kolben 5 gestuft sind und in einem jeweiligen ebenfalls gestuften Zylinder 18 geführt sind. Dabei sind die Zylinder 18 sternförmig in einem Rotor 20 angeordnet, der über die radial nach außen gedrängte Kolben 5 rotatorisch angetrieben wird und dabei eine Abtriebswelle 7 mitnimmt. Dazu werden die Zylinder 18 über einen Kommutator 24 und über jeweilige in den Rotor 20 eingebrachte radiale Kanäle 22 und abwechselnd mit einem Hochdruck- und Niederdruckanschluss (beide nicht gezeigt) des Radialkolbenmotors verbunden.

Benachbart zum Rotor 20 ist an der Abtriebswelle 7 ein erstes Kegelrollenlager 26 montiert. Im Bereich einer radialen Erweiterung der Abtriebswelle 7 ist ein zweites Kegelrollenlager 28 montiert. Über die beiden Kegelrollenlager 26, 28 ist die Abtriebswelle 7 im ersten Gehäuseteil 8a gelagert, wobei das zweite Kegelrollenlager 28 in einem axial hervorstehenden Gehäusebund 30 des ersten Gehäuseteils 8a angeordnet ist.

An einem Endabschnitt des Gehäusebundes 30 ist ein Wellendichtring 9 befestigt, der an einer weiteren radialen Erweiterung der Abtriebswelle 7 anliegt. Damit trennt der Wellendichtring 9 einen zwischen dem Gehäusebund 30 und der Abtriebswelle 7 gebildeten Lagerbereich von einem am Außenumfang des Gehäusebundes 30 gebildeten Bremsraum 10. Dieser ist radial innen vom Gehäusebund 30 begrenzt, während er radial außen von einem Wellenbund 32 begrenzt ist, der über einen Scheibenabschnitt 34 einstückig an der Abtriebswelle 7 ausgeformt ist. Damit ist der Bremsraum 10 in axialer Richtung einerseits vom Scheibenabschnitt 34 der Abtriebswelle 7 und andererseits vom ersten Gehäuseteil 8a begrenzt.

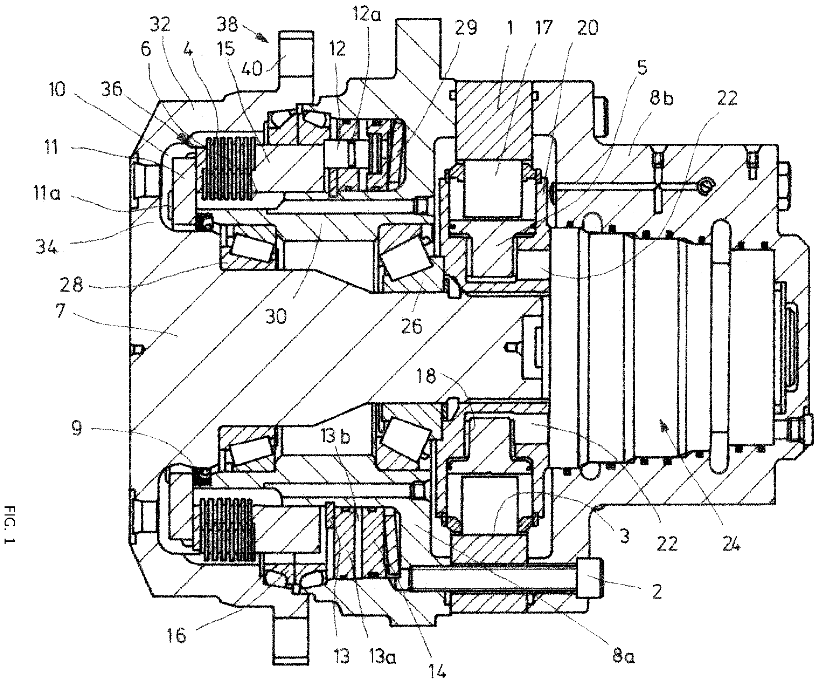

Im Bremsraum 10 ist ein Lamellenpaket 36 einer Lamellenbremse angeordnet, wobei das Lamellenpaket 36 eine Vielzahl von einzelnen Lamellen aufweist, die abwechselnd als wellenbundseitige Lamelle 4 und als gehäusebundseitige Lamelle 6 ausgebildet ist. Dabei sind die wellenbundseitigen Lamellen 4 an ihrem Außenumfang drehfest am Wellenbund 32 befestigt, während die gehäusebundseitigen Lamellen 6 über ihren Innenumfang drehfest am Gehäusebund 30 befestigt sind. An ihrer in Figur 1 linken Seite ist das Lamellenpaket 36 über einen Rückhaltering 11 und über den Gehäusebund 30 am ersten Gehäuseteil 8a abgestützt. Dazu ist der Rückhaltering 11 über mehrere Schrauben 11a am Gehäusebund 30 befestigt. An ihrer in Figur 1 rechten Seite liegt eine Distanzbuchse 15 am Lamellenpaket 36 beziehungsweise an dessen ersten gehäusebundseitigen Lamelle 6 an. Die Distanzbuchse 15 ist von einer Tellerfeder 29 über einen ringförmigen Kolben 14 und über gleichmäßig am Umfang verteilte Stifte 12 in Richtung "Bremsen" (in Figur 1 von rechts nach links) vorgespannt.

Über einen ringförmigen Druckraum 13b kann der Kolben 14 in Richtung "Bremse lösen" (in Figur 1 von links nach rechts) gegen die Kraft der Tellerfeder 29 bewegt werden, wodurch eine Pressung des Lamellenpaketes 36 aufgehoben wird. Dabei ist der Druckraum 13b über einen Dichtring 13a begrenzt und vom Bremsraum 10 abgetrennt, wobei sich Dichtring 13a über einen Sicherungsring 13 am Gehäusebund 30 abstützt. Die Stifte 12 liegen am Kolben 14 an und erstrecken sich vom diesem durch den Druckraum 13b und durch den Dichtring 13a und liegen an der Distanzhülse 15 an ihrer vom Lamellenpaket 36 abgewandten Seite an. Zur Abdichtung des Druckraumes 13b haben die Stifte 12 jeweilige Dichtungen 12a.

Die Tellerfeder 29, der Kolben 14, der Druckraum 13b, der Dichtring 13a, der Sicherungsring 13 und die Stifte 12 sind komplett in einer Ausnehmung des ersten Gehäuseteils 8a aufgenommen, der radial innen vom Gehäusebund 30 und radial außen von einem weiteren Gehäusebund begrenzt ist. Der Bremsraum 10 ist an seiner Außenseite vom rotierbaren Wellenbund 32 umfasst. Am Außenumfang der Distanzbuchse 15 ist radial beabstandet eine Doppelkegel-Dichtung 16 angeordnet, die die Rotation des Wellenbundes 32 gegenüber dem weiteren Gehäusebund des ersten Gehäuseteils 8a ermöglicht und dabei den Bremsraum 10 gegenüber der Umgebung abdichtet.

Erfindungsgemäß ist am Außenumfang des Wellenbundes 32 an dessen vom Scheibenabschnitt 34 abgewandten Bereich ist ein Abtriebsflansch 38 einstückig am Wellenbund 32 und damit an der Abtriebswelle 7 angeordnet. Der Abtriebsflansch 38 ist als scheibenartige radiale Erweiterung ausgebildet und hat an ihrem Umfang verteilte Durchgangsbohrungen 40, über die z.B. ein (nicht gezeigtes) Rad am Radialkolbenmotor befestigt werden kann.

Damit erstreckt sich der Wellenbund 32 - in axialer Richtung betrachtet - vom Scheibenelement 34 bis zum Abtriebsflansch 38, wobei der Abtriebsflansch 38 zur optimalen Abstützung - in axialer Richtung betrachtet - zwischen den beiden Kegelrollenlagern 26, 28 angeordnet ist. So können von Abtriebsflansch 38 über den Wellenbund 32 über das Scheibenelement 34, und über die Abtriebswelle 7 hohe radiale Kräfte aufgenommen und in die beiden Lager 26, 28 abgeleitet werden. Dabei ist der axiale Bauraum der beiden Lager 26, 28, der Bremse und des Abtriebsflansches 38 dadurch minimiert, dass diese Komponenten einseitig der Zylinder-Kolben-Einheiten 5, 18 (in Figur 1 links) auf axial minimalen Bauraum angeordnet sind. Diese Bauraumminimierung erfolgt erfindungsgemäß dadurch, dass der Abtriebsflansch 38 radial betrachtet die Bremse umgreift, und dass die Bremse radial betrachtet die beiden Lager 26, 28 umgreift.

Abweichend von den gezeigten Ausführungsbeispielen kann das Lamellenpaket 36 von der Tellerfeder 29 über die Distanzbuchse 15 gegen den Scheibenabschnitt 34 der Abtriebswelle 7 gespannt werden. Dabei entfällt der Rückhaltering 11. Somit kann die Anzahl der Lamellen 4,6 erhöht werden, und so ein höheres Bremsmoment bei gleicher Kraft der Tellerfeder 29 übertragen werden.

Offenbart ist ein Radialkolbenmotor mit sternförmig angeordneten Zylinder-Kolben-Einheiten, einem Gehäuse und einer Abtriebswelle. Zwischen einem inneren axialen hülsenartigen Bund des Gehäuses und einem äußeren axialen hülsenartigen Bund der Abtriebswelle ist zumindest abschnittsweise eine Bremse - insbesondere deren Lamellen - angeordnet. An der Abtriebswelle ist ein Abtriebsflansch z.B. zur Befestigung eines vom Motor angetriebenen Rades befestigt. Der Abtriebsflansch ist radial außerhalb des axialen Wellenbundes an diesem befestigt. Der Abtriebsflansch kann einen Bohrungskranz haben, der entsprechend ebenfalls radial außerhalb vom axialen Wellenbund an diesem angeordnet ist.

### Bezugszeichenliste

- 1: Hubring
- 2: Schraube
- 3: Hubkurve
- 4: wellenbundseitige Lamelle
- 5: Kolben
- 6: gehäusebundseitige Lamelle
- 7: Abtriebswelle
- 8a: erstes Gehäuseteil
- 8b: zweites Gehäuseteil
- 9: Wellendichtring
- 10: Bremsraum
- 11: Rückhaltering
- 11a: Schraube
- 12: Stift
- 12a: Dichtung
- 13: Sicherungsring
- 13a: Dichtring
- 13b: Druckraum
- 14: Kolben
- 15: Distanzbuchse
- 16: Doppelkegel-Dichtung
- 17: Rolle
- 18: Zylinder
- 20: Rotor
- 22: Kanal
- 24: Kommutator
- 26: erstes Kegelrollenlager
- 28: zweites Kegelrollenlager
- 29: Tellerfeder
- 30: Gehäusebund
- 32: Wellenbund
- 34: Scheibenabschnitt
- 36: Lamellenpaket
- 38: Abtriebsflansch
- 40: Durchgangsbohrung

## Patentansprüche

1. Radialkolbenmotor mit sternförmig angeordneten Zylinder-Kolben-Einheiten (5, 18) und mit einem Gehäuse (8a, 8b) und mit einer Abtriebswelle (7), wobei zwischen einem radial inneren axialen Gehäusebund (30) und einem radial äußeren axialen Wellenbund (32) zumindest abschnittsweise eine Bremse angeordnet ist, und wobei an der Abtriebswelle (7) ein Abtriebsflansch (38) befestigt ist, wobei der Wellenbund (32) über einen Scheibenabschnitt (34) einstückig mit der Abtriebswelle (3) verbunden ist, wobei zwei Lager (26, 28) zur Lagerung der Abtriebswelle (7) im Gehäuse vorgesehen sind, wobei zumindest ein Lager (28) im Gehäusebund (30) aufgenommen ist, wobei die beiden Lager (26, 28) die Abtriebswelle (7) umfassen, und wobei der Gehäusebund (30) zumindest ein Lager (28) umfasst, und wobei die Bremse den Gehäusebund (30) umfasst, und wobei der Wellenbund (32) die Bremse umfasst, und wobei der Abtriebsflansch (38) den Wellenbund (32) umfasst, **dadurch gekennzeichnet, dass** der Abtriebsflansch (38) radial außerhalb vom Wellenbund (32) an diesem befestigt ist, wobei am Außenumfang des Wellenbundes (32) an dessen vom Scheibenabschnitt (34) abgewandten Bereich der Abtriebsflansch (38) einstückig am Wellenbund (32) angeordnet ist, wobei sich der Wellenbund (32), in axialer Richtung betrachtet, vom Scheibenabschnitt (34) bis zum Abtriebsflansch (38) erstreckt, wobei der Abtriebsflansch (38) axial zwischen den beiden Lagern (26, 28) angeordnet ist.

2. Radialkolbenmotor nach Anspruch 1, wobei die Bremse eine Lamellenbremse mit gehäusebundseitigen Lamellen (6) und wellenbundseitigen Lamellen (4) ist.

3. Radialkolbenmotor nach Anspruch 2, wobei zum Aktivieren der Bremse die Lamellen (4, 6) von einer Tellerfeder (29) über einen kreisscheibenförmigen Kolben (14) gegen einen stirnseitig am Gehäusebund (30) befestigten Rückhaltering (11) pressbar sind.

4. Radialkolbenmotor nach Anspruch 3, wobei die Tellerfeder (29) über einen ringförmigen Druckraum (13b) und über den Kolben (14) in Richtung weg von den Lamellen (4, 6) zum Lösen der Bremse spannbar ist.

5. Radialkolbenmotor nach Anspruch 4 mit einem kreisscheibenförmigen Dichtring (13a), über den der Druckraum (13b) gegenüber einem Bremsraum (10), in dem die Lamellen (4, 6) angeordnet sind, begrenzt und abgedichtet ist.

6. Radialkolbenmotor nach Anspruch 5, wobei der Druckraum (13b) und der Dichtring (13) von mehreren gestuften Stiften (12) durchsetzt sind, die einerseits am Kolben (14) und andererseits an einer Distanzbuchse (15) anliegen, wobei die Stifte (12) jeweils eine Dichtung (12a) aufweisen, und wobei die Distanzbuchse (15) an einer gehäusebundseitigen Lamelle (6) anliegt.

7. Radialkolbenmotor nach Anspruch 5 oder 6, wobei zwischen dem Abtriebsflansch (38) oder dem Wellenbund (32) und dem Gehäuse (8a, 8b) eine Doppelkegel-Dichtung (16) zur Abdichtung des Bremsraumes (10) gegenüber der Umgebung vorgesehen ist.

8. Radialkolbenmotor nach einem der vorhergehenden Ansprüche, der ein Mehrhubmotor mit einem die Zylinder-Kolben-Einheiten (5 ,18) umfassenden Hubring (1) ist.

9. Radialkolbenmotor nach Anspruch 8 wobei der Hubring (1) zwischen einem ersten Gehäuseteil (8a) und einem zweiten Gehäuseteil (8b) eingespannt ist, und wobei am Hubring (1) eine erste Dichtung angebracht ist die am ersten Gehäuseteil (8a) anliegt und wobei am zweiten Gehäuseteil (8b) eine zweite Dichtung angeordnet ist, die am Hubring (1) anliegt.

## Claims

1. Radial piston motor having cylinder-piston units (5, 18) arranged in a star shape and having a housing (8a, 8b) and having an output shaft (7), wherein a brake is arranged at least in certain sections between a radially inner axial housing collar (30) and a radially outer axial shaft collar (32), and wherein an output flange (38) is attached to the output shaft (7), wherein the shaft collar (32) is connected via a disk section (34) in one piece to the output shaft (3), wherein two bearings (26, 28) for supporting the output shaft (7) in the housing are provided, wherein at least one bearing (28) is accommodated in the housing collar (30), wherein the two bearings (26, 28) surround the output shaft (7), and wherein the housing collar (30) surrounds at least one bearing (28), and wherein the brake surrounds the housing collar (30), and wherein the shaft collar (32) surrounds the brake, and wherein the output flange (38) surrounds the shaft collar (32), **characterized in that** the output flange (38) is attached to the shaft collar (32), radially outside said shaft collar (32), wherein the output flange (38) is arranged in one piece on the shaft collar (32), on the outer circumference of said shaft collar (32) in the region thereof facing away from the disk section (34), wherein the shaft collar (32) extends, when viewed in the axial direction, from the disk section (34) as far as the output flange (38), wherein the output flange (38) is arranged axially between the two bearings (26, 28).

2. Radial piston motor according to Claim 1, wherein the brake is a multiplate brake with housing-collar-side plates (6) and shaft-collar-side plates (4).

3. Radial piston motor according to Claim 2, wherein, in order to activate the brake, the plates (4, 6) can be pressed by a disk spring (29), via a circular-disk-shaped piston (14), against a retaining ring (11) which is attached to the end side of the housing collar (30).

4. Radial piston motor according to Claim 3, wherein the disk spring (29) can be tensioned, via an annular pressure space (13b) and via the piston (14), in the direction away from the plates (4, 6) in order to release the brake.

5. Radial piston motor according to Claim 4, with a circular-disk-shaped sealing ring (13a), by means of which the pressure space (13b) is bounded and sealed with respect to a brake space (10) in which the plates (4, 6) are arranged.

6. Radial piston motor according to Claim 5, wherein the pressure space (13b) and the sealing ring (13) are penetrated by a plurality of stepped pins (12), which bear, on the one hand, against the piston (14) and, on the other hand, against a spacer bushing (15), wherein the pins (12) each have a seal (12a), and wherein the spacer bushing (15) bears against a housing-collar-side plate (6).

7. Radial piston motor according to Claim 5 or 6, wherein a double-cone seal (16) for sealing the brake space (10) with respect to the surroundings is provided between the output flange (38) or the shaft collar (32) and the housing (8a, 8b).

8. Radial piston motor according to one of the preceding claims, which is a multi-stroke motor with a stroke ring (1) which surrounds the cylinder-piston units (5, 18).

9. Radial piston motor according to Claim 8, wherein the stroke ring (1) is clamped in between a first housing part (8a) and a second housing part (8b), and wherein a first seal, which bears against the first housing part (8a), is attached to the stroke ring (1), and wherein a second seal, which bears against the stroke ring (1), is arranged on the second housing part (8b) .

## Revendications

1. Moteur à pistons radiaux comprenant des unités cylindre-piston (5, 18) disposées en forme d'étoile et un boîtier (8a, 8b) et un arbre de prise de force (7), au moins un frein étant disposé en partie entre un épaulement de boîtier axial radialement interne (30) et un épaulement d'arbre axial radialement externe (32), et une bride de prise de force (38) étant fixée au niveau de l'arbre de prise de force (7), l'épaulement d'arbre (32) étant connecté d'une seule pièce à l'arbre de prise de force (3) par le biais d'une portion de disque (34), deux paliers (26, 28) étant prévus pour le support sur palier de l'arbre de prise de force (7) dans le boîtier, au moins un palier (28) étant reçu dans l'épaulement de boîtier (30), les deux paliers (26, 28) entourant l'arbre de prise de force (7) et l'épaulement de boîtier (30) entourant au moins un palier (28), et le frein entourant l'épaulement de boîtier (30), et l'épaulement d'arbre (32) entourant le frein, et la bride de prise de force (38) entourant l'épaulement d'arbre (32), **caractérisé en ce que** la bride de prise de force (38) est fixée radialement à l'extérieur de l'épaulement d'arbre (32) à celui-ci, la bride de prise de force (38) étant disposée d'une seule pièce sur l'épaulement d'arbre (32) au niveau de la périphérie extérieure de l'épaulement d'arbre (32) au niveau de sa région opposée à la portion de disque (34), l'épaulement d'arbre (32), vu dans la direction axiale, s'étendant depuis la portion de disque (34) jusqu'à la bride de prise de force (38), la bride de prise de force (38) étant disposée axialement entre les deux paliers (26, 28).

2. Moteur à pistons radiaux selon la revendication 1, dans lequel le frein est un frein à disques avec des disques (6) du côté de l'épaulement de boîtier et des disques (4) du côté de l'épaulement d'arbre.

3. Moteur à pistons radiaux selon la revendication 2, dans lequel, pour l'activation du frein, les disques (4, 6) peuvent être pressés par un ressort à coupelle (29) par le biais d'un piston (14) en forme de disque circulaire contre une bague de retenue (11) fixée du côté frontal à l'épaulement de boîtier (30).

4. Moteur à pistons radiaux selon la revendication 3, dans lequel le ressort à coupelle (29) peut être serré par le biais d'un espace de pression annulaire (13b) et par le biais du piston (14) dans la direction l'écartant des disques (4, 6) pour desserrer le frein.

5. Moteur à pistons radiaux selon la revendication 4, comprenant une bague d'étanchéité en forme de rondelle circulaire (13a), par le biais de laquelle l'espace de pression (13b) est limité et étanchéifié par rapport à un espace de frein (10) dans lequel sont disposés les disques (4, 6).

6. Moteur à pistons radiaux selon la revendication 5, dans lequel l'espace de pression (13b) et la bague d'étanchéité (13) sont traversés par plusieurs goupilles étagées (12) qui s'appliquent d'une part contre le piston (14) et d'autre part contre une douille d'espacement (15), les goupilles (12) présentant à chaque fois un joint d'étanchéité (12a), et la douille d'espacement (15) s'appliquant contre un disque (6) du côté de l'épaulement de boîtier.

7. Moteur à pistons radiaux selon la revendication 5 ou 6, dans lequel, entre la bride de prise de force (38) ou l'épaulement d'arbre (32) et le boîtier (8a, 8b) est prévu un joint d'étanchéité à double cône (16) pour l'étanchéité de l'espace de frein (10) par rapport à l'environnement.

8. Moteur à pistons radiaux selon l'une quelconque des revendications précédentes, lequel est un moteur à courses multiples avec un anneau de course (1) comprenant les unités cylindre-piston (5, 18).

9. Moteur à pistons radiaux selon la revendication 8, dans lequel l'anneau de course (1) est serré entre une première partie de boîtier (8a) et une deuxième partie de boîtier (8b), et un premier joint d'étanchéité est monté sur l'anneau de course (1), lequel s'applique contre la première partie de boîtier (8a) et un deuxième joint d'étanchéité est disposé au niveau de la deuxième partie de boîtier (8b), lequel s'applique contre l'anneau de course (1).
